# EUROPEAN PATENT APPLICATION

(11) **EP 1 874 014 A2**
(43) Date of publication of application: **02.01.2008**
(21) Application number: 07010879.0
(22) Date of filing: 01.06.2007
(51) Int. Cl.: H04M 1/725, G06Q 20/00

(54) **Mobile commerce execution method and apparatus**

(30) Priority: 30.06.2006 KR 20060061155
(71) Applicant: Samsung Electronics Co., Ltd., Yeongtong-gu Suwon-si, Gyeonggi-do (KR)
(72) Inventor: An, Hae Jun, Suwon-si Gyeonggi-do (KR); Yang, Hyun Kieu, Suwon-si Gyeonggi-do (KR); Jeong, Soon In, Suwon-si Gyeonggi-do (KR); Son, Hyeon Seok, Suwon-si Gyeonggi-do (KR)
(74) Representative: Lang, Johannes

(57) **Abstract**

A mobile commerce execution method and apparatus using a mobile device (210) and an external mobile commerce module (250) is provided. The method for executing mobile commerce includes detecting (603), at the mobile device, a connection of an external module, determining (605) whether the external module is a mobile commerce module (250), activating a mobile commerce function (613) by exchanging control signals with the mobile commerce module, and executing an operation according to a key input.

## Description

### BACKGROUND OF THE INVENTION

### Field of the Invention:

The present invention relates to a mobile device. More particularly, the present invention relates to a mobile commerce execution method and apparatus using a mobile device and an external mobile commerce module.

### Description of the Related Art:

Advance in wireless technology is increasing a number of mobile device users and giving pace to a rapid development of electronic commerce (e-commerce) conducted with these devices.

A new type of e-commerce transactions, conducted through mobile devices using a wireless telecommunications network and other wired e-commerce technologies, is called mobile commerce (M-commerce).

Recently, mobile devices have been implemented with various functions, such as, audio and video files playback function, camera function for taking still or motion pictures, mobile commerce function, and the like.

The mobile commerce function is an ability to conduct commerce using a mobile device, such as, a mobile phone, personal digital assistant (PDA), and smart phone, while moving.

Electronic commerce comprises distribution, buying, selling, marketing, and servicing of products or services over electronic systems such as the Internet and other computer networks. Mobile commerce is recognized as being the next generation of electronic commerce, in which the buying and selling of goods and services are performed through wireless mobile devices such as cellular telephones and PDAs.

Mobile commerce is also known as M-Commerce, Mobile Electronic Commerce, Wireless Electronic Commerce, and the like. The mobile commerce service is likely to be named by the service providers in consideration of the features of their services.

Mobile commerce can be categorized into several applications, such as, Mobile Banking, Mobile Brokerage, Mobile Ticketing, and Mobile Payment Gateway.

Mobile banking supports account inquiry, inter account transfer, giro accounting, time deposits, credit cards accounting, and other functions by enabling users to wirelessly access Internet while moving.

Mobile Brokerage provides users with mobile solutions such as quotes, stock trades, account updates, watch lists, and market news.

The Mobile Coin service allows users to purchase goods using a mobile device by communicating with a vending machine, which has a communication module with a unique identification number.

The Mobile Payment Gateway service is a micro payment service that authorizes payment for games, movies, music, and other digital contents purchased online using a mobile device. Typically, authentication is performed with a customer's phone number and Social Security Number, using a short message service (SMS).

Mobile Commerce can be implemented with a Radio Frequency Identification (RFID) or Infrared Data Association (IrDA) technology that is embedded in the customer's mobile device together with an Integrated Circuit (IC) chip storing a customer's credit card and financial account information.

IrDA is a personal area communication protocol for short range exchange of data over infrared light, and RFID is an automatic identification technique in which a mobile device having an RF antenna, such as, a loop antenna, communicates with an RFID reader.

The RFID reader is a terminal which reads the information from the RFID tag of the mobile device when the mobile device approaches the RFID reader.

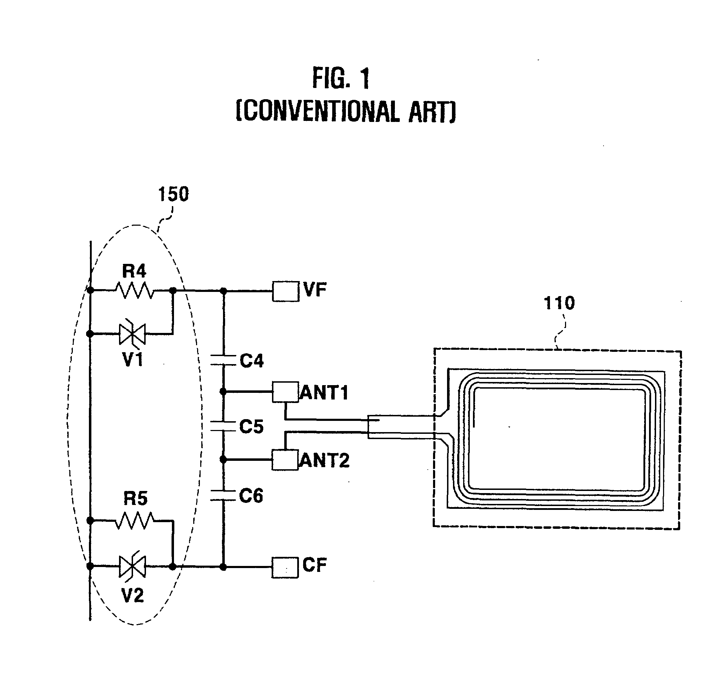

FIG. 1 is a circuit diagram illustrating an RF circuit of a conventional mobile device for executing mobile commerce.

Referring to FIG. 1, a loop antenna 110 of the mobile device is a Flexible Printed Circuit Board (FPCB) implemented in the form of a film, and applied onto a battery cell so as to be coupled with a current feedback (CF) terminal and voltage feedback (VF) terminals of a battery protection circuit 150 for a charger and battery through two power supply terminals.

The information on the user is stored in a User Identification Module (UIM) by the service provider and the UIM generates signals that can be read by the reader. The UIM transmits the signals to the loop antenna 110 through the CF and VF terminals.

The loop antenna 110 is connected to the CF and VF terminals through second antenna ANT2 and first antenna ANT1, respectively, so as to receive the information stored in the UIM.

Capacitors C4 and C6 are interposed, respectively, between the CF and VF and the first and second antennas ANT1 and ANT2 so as to block the direct currents from the battery. That is, the capacitors are provided as impedance matching elements for tuning the frequency, for example, 13.56MHz, used by the loop antenna 110.

In an exemplary implementation, the mobile device supporting the RFID function requires an electric wave absorber for absorbing a reflection wave of the electric wave, which is induced from the loop antenna, and reflected by a metal plate of the battery cell, in addition to the capacitors.

A battery pack is provided with an electric wave absorber interposed between the battery cell and the loop antenna 110 in a thickness of 0.4 mm or greater. The electric absorber absorbs the electric wave emitted by the loop antenna 110 and reflected by the metal plate of the battery cell so as to prevent the frequency from being attenuated, resulting in improvement of the impedance matching effect.

The conventional mobile device supporting mobile commerce service has a drawback that the impedance matching circuit makes the structure of the printed circuit board (PCB) complex.

Also, UIM that contains the subscriber information is loaded inside the mobile commerce-enabled mobile device, making the size of the mobile commerce-enabled device larger than that of a mobile device.

Also, the IrDA based mobile commerce-enabled mobile device requires additional spaces for mounting the IrDA module (of which the volume is about 7*2.6*1.6mm) and the FPCB loop antenna (of which the thickness is about 3.0mm).

As described above, one drawback of the conventional mobile commerce-enabled mobile device is that the mobile commerce-related elements require much space, resulting in an obstacle against slim design.

In addition, in the case of a mobile device supporting Bluetooth as well as the IrDA for the purpose of mobile commerce, the overlapped communication functions of the Bluetooth and IrDA make the utilization complex.

In addition, the conventional mobile commerce-enabled device is implemented with an inbuilt mobile commerce module, even though the mobile commerce is an unwanted option for some customers, and the module cannot be removed when temporarily not in use.

Accordingly, a need exists for an apparatus and method for performing Mobile commerce without the inconvenience caused by increased size and complexity when a commerce module is integrated in a mobile device.

### SUMMARY OF THE INVENTION

Accordingly, exemplary embodiments of the present invention address at least the above problems and/or disadvantages, and an object of the present invention is to provide an apparatus and method for executing mobile commerce.

Another object of exemplary embodiments of the present invention is to provide an apparatus and method for supporting mobile commerce with a detachable mobile commerce module.

An aspect of exemplary embodiments of the present invention is to provide a method for executing mobile commerce using a mobile device with a separate mobile commerce module. The method comprises detecting, at the mobile device, a connection of an external module, determining whether the external module is a mobile commerce module, activating, if the external module is a mobile commerce module, a mobile commerce function by exchanging control signals with the mobile commerce module, and executing an operation according to a key input.

Another aspect of exemplary embodiments of the present invention is to provide an apparatus for executing mobile commerce. The apparatus comprises a mobile device that provides an interface for connecting an external module, checking signals input through the interface, and performing a mobile commerce related operation if the signals are related to the mobile commerce operation, and a mobile commerce module that may be attached to the mobile device for performing a mobile commerce function, the mobile commerce module being connected to the mobile device through a connection interface.

Other aspects, advantages, and salient features of the present invention will become apparent to those skilled in the art from the following detailed description, which, taken in conjunction with the accompanying drawings, discloses exemplary embodiments of the invention.

### BRIEF DESCRIPTION OF THE DRAWINGS

The above and other objects, features and advantages of the present invention will be more apparent from the following detailed description in conjunction with the accompanying drawings, in which:
FIG. 1 is a circuit diagram illustrating an RF circuit of a conventional mobile device for executing mobile commerce;
FIG. 2 is a schematic view illustrating a mobile commerce-enabled device according to an exemplary embodiment of the present invention;
FIG. 3 is a block diagram illustrating a configuration of a mobile device of FIG. 2 in greater detail according to the exemplary impediment of the present invention;
FIG. 4A is a block diagram illustrating a configuration of the interface unit of a mobile device according to an exemplary embodiment of the present invention;
FIG. 4B is a block diagram illustrating a configuration of the interface unit of a mobile device according to an exemplary embodiment of the present invention;
FIG. 5 is a block diagram illustrating a mobile commerce module of FIG. 2 according to exemplary embodiment of the present invention; and
FIG. 6 is a flowchart illustrating a method for operating mobile commerce according to an exemplary embodiment of the present invention.

Throughout the drawings, like reference numerals will be understood to refer to like parts, components and structures.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

An exemplary embodiment of the present invention provides a detachable mobile commerce module and a mobile commerce-enabled device having an interface for optionally attaching the mobile commerce module.

In an exemplary implementation of the present invention, a hardware configuration for supporting mobile commerce is implemented as a detachable external mobile commerce module. Since the mobile commerce function is enabled with an optionally attached external module, the design of the mobile device is not limited for the mobile commerce function.

In an exemplary embodiment of the present invention, an external mobile commerce module is implemented so as to be coupled with a mobile device through a basic, functional interface such as an earphone socket, a data transfer port, or a personal area network, which may facilitate compatibility.

Further, since a loop antenna, which is typically applied to a battery of the mobile device, is implemented on a printed circuit board (PCB) of the external mobile commerce module in the present invention, it is possible to decrease the manufacturing cost and allow customers to purchase the external mobile commerce module.

In an exemplary implementation of the present invention, a mobile device and an external mobile commerce module are provided with User Identification Module (UIM) and Infrared Data Association (IrDA) interfaces. The mobile device can be implemented to attach to the mobile commerce module through an earphone socket, data transfer port, and personal area network interface such as Bluetooth.

In exemplary implementation, the mobile commerce-enabled device of an exemplary embodiment of the present invention comprises a mobile device, a mobile commerce module that can be coupled to the mobile device, and an interface unit for coupling the mobile device and the mobile commerce module.

In order to simplify explanation, an exemplary embodiment of the present invention is described with reference to a mobile device supporting the mobile commerce with a detachable external mobile commerce module, as an example. However, the mobile device can be a cellular phone, personal communication service (PCS) phone, dedicated DMB receiver, smart phone, International Mobile Telecommunication 2000 (IMT-2000) terminal, Universal Mobile Telecommunication Service (UMTS) terminal, laptop computer, personal computer, and the like.

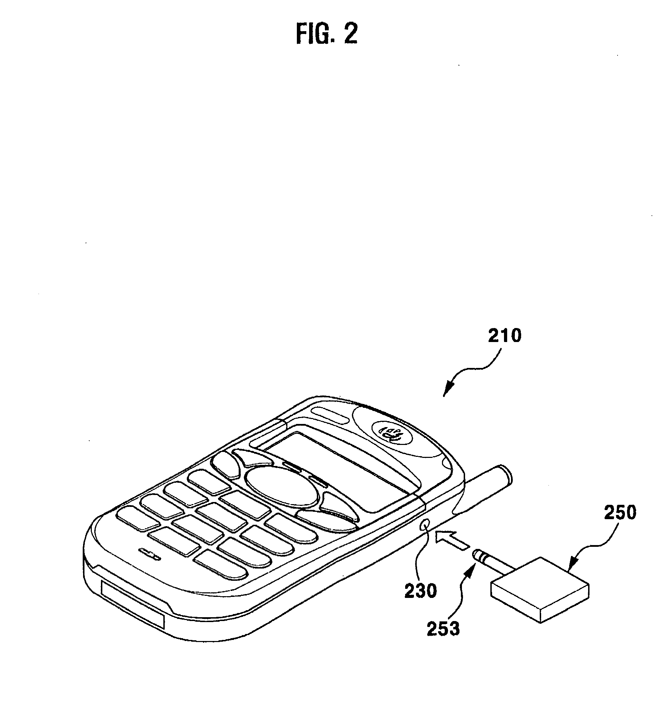

FIG. 2 is a schematic view illustrating a mobile commerce-enabled device according to an exemplary embodiment of the present invention.

Referring to FIG. 2, the mobile commerce-enabled device comprises a mobile device 210 and a mobile commerce module 250. The mobile device is provided with a connection interface 230 through which the mobile commerce module 250 is connected.

The connection interface 230 can be an earphone socket, a data transfer port, or a personal area network interface. In the exemplary embodiment, the earphone socket is adopted as an example of the connection interface.

In an exemplary implementation, the connection interface 230 may be configured to connect various peripheral devices to the mobile device 210. Accordingly, the connection interface 230 may be implemented in consideration of a common hardware platform.

The mobile commerce module 250 comprises a jack plug 253, which is plugged into the connection interface 230 in order to couple the mobile commerce module 250 with the mobile device 210.

In an exemplary implementation, the mobile commerce module may be configured as a separate device having a jack plug plugged into the corresponding socket of the mobile device. However, the present invention is not limited to the connecter based separate module but can be implemented in various kinds of external modules.

If the mobile commerce module 250 is connected to the mobile device 210 through the connection interface 230, the mobile device 210 detects the connection of the mobile commerce module 250 and performs operations required for activating the mobile commerce function.

If a connection of the mobile commerce module 250 is detected, the mobile device 210 displays service screen images represented by service guidance, waiting mode, operation status, and data communication status screen images.

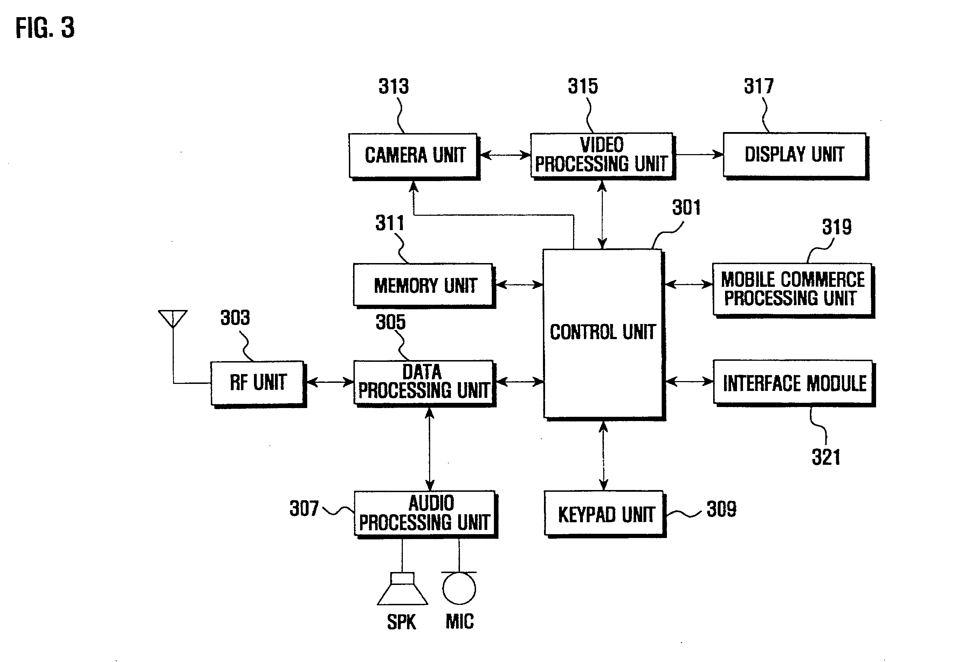

FIG. 3 is a block diagram illustrating a configuration of a mobile device of FIG. 2 in greater detail according to exemplary embodiment of the present invention.

Referring to FIG. 3, the mobile device comprises an input means, a processing means, a storage means, an output means, and a communication means.

The input means comprises an audio processing unit 307, a keypad unit 309 for enabling the user to input alphanumeric data, and a camera unit 313 for taking pictures. In the case that the display unit 317 is implemented as a liquid crystal display (LCD) supporting a touch screen function, the display unit 317 can be included in the input means. The input means is responsible for obtaining various data such as voice data, alphanumeric data, and video data through the elements constituting the input means.

The processing means comprises a video processing unit 315 for converting analog signals of the picture taken by the camera unit 313 into digital video signals, a mobile commerce processing unit 319 for processing mobile commerce services, an interface module 321, a data processing unit 305 for processing audio signals output from the audio processing unit 307 and key input signals generated through the keypad unit 309, and a control unit 301 for controlling overall operation of the mobile device.

The storage means stores user data such as text documents, pictures taken by the camera unit 313, and application programs for controlling the operations of the mobile device. The storage means comprises a memory 311.

The output means comprises a display unit 317 for displaying user input information and application data generated by the application program, and the audio processing unit 307 for outputting audio data.

The communication means comprises an RF unit 303, which communicates with a web server through at least an antenna. The RF unit 303 can support various types of communication services such as cellular or other wireless communications.

The RF unit 303 comprises a radio frequency transmitter and a radio frequency receiver, both of which are coupled to an antenna that is used for transmitting and receiving radio signals through the air channel. The RF unit 303 is coupled to the data processing unit 305, which processes digital signals into a form that can be transmitted by the transmitter of the RF unit 303 or processes baseband signals received and modulated by the receiver of the RF unit 303 into digital form for other units of the mobile device.

The data processing unit 305 is further coupled to the control unit 301, which controls operation of the mobile device in accordance with instructions stored in the memory unit 311. The data processing unit 305 handles all of the audio, signal, and data processing needed to receive and send data using RF transmission or Bluetooth transmissions.

The data processing unit 305 is responsible for processing audio data input through the audio processing unit 307 and alphanumeric data input through the keypad unit 309. The data processing unit 305 also comprises a means for encoding and modulating a signal to be transmitted through the RF unit 303 and a means for demodulating and decoding a signal received through the RF unit 303. In addition, the data processing unit is provided with a modem and a codec pack supporting encoding and decoding of the video and audio data. The codec pack comprises data codecs and audio codecs.

The audio processing unit 307 converts analog audio signals received at a microphone into digital signals and converts digital audio signals received from the data processing unit 305 into analog audio signals to be played over a speaker.

The keypad unit 309 comprises a plurality of alphanumeric keys for enabling a user to input alphanumeric characters, and various function keys enabling the user to input commands for operating corresponding functions. The keypad unit 309 allows the user to input alphanumeric data and instructions for performing operations, especially associated with the M-commerce function.

The memory unit 311 comprises a program memory and a data memory. The program memory stores programs for controlling the general operations of the mobile device and application programs for controlling the mobile commerce function of the mobile device.

The data memory temporarily stores the data generated during the operations of the programs and a database for arranging the data in the form of a table.

The application programs for operating the mobile commerce function comprise a program for recognizing connection of the external module, a program for reading information from the external module, a program for controlling operations of the mobile commerce function and the basic communication function, a program for controlling routing signals when the external module is determined to be the mobile commerce module, and a program for displaying information requested by the mobile commerce module. For example, these programs can be stored in the form of flash files.

The camera unit 313 takes a picture and converts the picture of analog signals into video signals in interoperation with an encoder (not shown). The video processing unit 315 converts video signals from the camera into image signals processed to be appropriate for the display unit 317. The camera unit 313 comprises a camera sensor for taking an image on the lens and converting the optical image signal into the electric signal and a signal processor for converting the analog signal outputted from the camera sensor into a digital signal. The camera is implemented with a charge coupled device (CCD) or a complementary metal oxide semiconductor (CMOS) sensor, and the signal processor is a digital signal processor (DSP). The camera sensor and the signal processor can be integrated as a single module.

The video processing unit 315 processes the application data image and menu screen image to be suitable for the display unit 317 and then transmits the processed images to the display unit 317 under the control of the control unit 301. The application data image comprises data related to the M-commerce function and messages for notifying the settings of the M-commerce function.

The video processing unit 315 is provided with a function for compression/decompression of the video data and at least one video codec. The video codec comprises a JPEG codec, an MPEG4 codec, and a Wavelet codec.

The display unit 317 presents the video data output from the video processing unit 315. The display unit 317 also presents the application data additional function screens generated by the mobile communication application. In addition, the display unit 317 can present the menu screen for operating the mobile commerce function according to the user's manipulation. The display unit 317 also presents an announcement message for notifying the connection of the mobile commerce module under the control of the control unit 317.

The mobile commerce processing unit 319 is responsible for processing the operation associated with the mobile commerce function according to the input signal from the mobile commerce module under the control of the control unit 301.

The interface module 321 provides a connection interface for connecting the mobile commerce module to the mobile device and transfers the signal input from the mobile commerce module to the control unit 301. The interface module 321 also performs switching of signal routes according to the signal input from the mobile commerce module.

The control unit 301 controls the general operations of the mobile device and interoperation or cooperation between the internal units constituting the mobile device. The control unit 301 can be integrated with the data processing unit 305. The control unit 301 also controls the signal flows among the data processing unit 305, keypad unit 309, memory unit 311, camera unit 313, video processing unit 315, mobile commerce processing unit 319, and interface module 321.

Further, the control unit 301 controls the mobile commerce-related operations when the mobile commerce module is connected to the mobile device through the interface module 321.

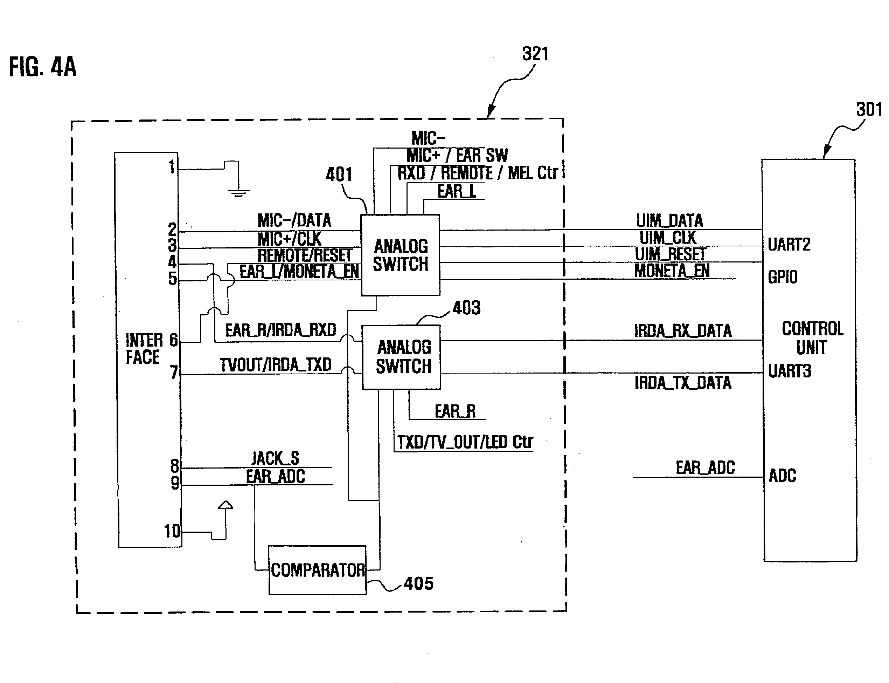

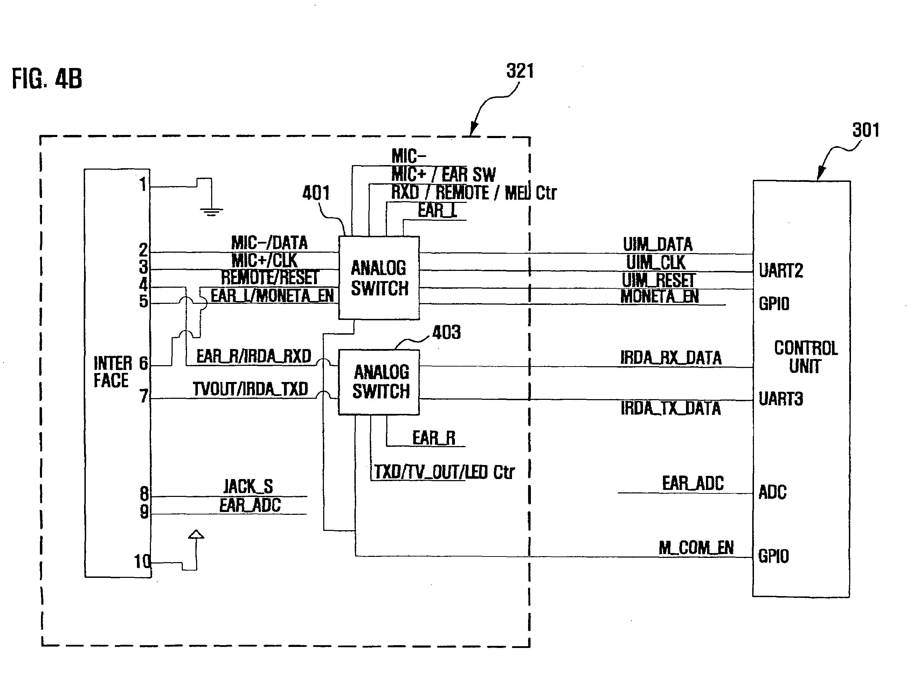

FIGs. 4A and 4B are block diagrams illustrating exemplary configurations of the interface module of FIG. 3 according to an exemplary embodiment of the present invention.

Referring to FIGs. 4A and 4B, the interface module 321 can be implemented as an earphone port or a data communication port. In this exemplary embodiment, the earphone port is explained as an interface module 321 to which an earphone plug of the mobile commerce module is inserted for electrical connection between the mobile device and the mobile commerce module.

The interface module 321 comprises an interface card for connecting the mobile commerce module to the control unit 301 of the mobile device, analog switches 401 and 403 for sharing the lines with other functions such as the audio out function, and a comparator 405 for controlling switching of routes of the analog switches 401 and 403.

In FIGs. 4A and 4B, if an external module is connected, the mobile device receives a connection signal (jack_s) through a pin 8. On the basis of the connection signal, the mobile device detects the connection of an external module such as another mobile device, mobile commerce module or earphone.

After detecting the connection of the external module, the mobile device receives a signal through the pin 9. That is, the control unit 301 measures the voltage from the pin 9 as an external module identification signal (EAR-ADC), and determines which external module is connected on the basis of the external module identification signal.

The external module identification signal (EAR-ADC) of the pin 9 can be measured by the voltage applied to a resistor of the connected external module.

If it is determined that the external module connected to the mobile device is the mobile commerce module on the basis of the external module identification signal (EAR-ADC), the control unit 301 controls so as to set up routes for mobile commerce operation. The routing control is performed by controlling the analog switches 401 and 403.

FIG. 4A is a block diagram illustrating a configuration of the interface unit of a mobile device according to an exemplary embodiment of the present invention. In FIG. 4A, the analog switches 401 and 403 are controlled by a comparator 405. In greater detail, the comparator 405 receives the external module identification signal (EAR-ADC) and compares the external module identification signal (EAR-ADC) with stored reference values. The comparator then controls the analog switches 401 and 403 according to the comparison result.

FIG. 4B is a block diagram illustrating a configuration of the interface unit of a mobile device according to an exemplary embodiment of the present invention. In FIG. 4B, the analog switches 401 and 403 are controlled by a General Purpose Input/Output (GPIO) port. In greater detail, the control unit 301 receives the external module identification signal (EAR-ADC) and determines which external module is connected on the basis of the external module identification signal (EAR-ADC).

If it is determined that the connected external module is the mobile commerce module, the control unit 301 controls the analog switches 401 and 403 through the GPIO. In order to control the switches 401 and 403, the control unit 301 transmits a mobile commerce enable signal (M_COM_EN) to the analog switches 401 and 403.

After the signal route is changed by the switches 401 and 403 for the mobile commerce, the mobile device can operate the mobile commerce function.

When the interface unit of the mobile device is in a phone mode, pins 2, 3, 4, 5, 6, and 7 are utilized for stereo audio, remote control, and the like. If the mobile commerce module is connected to the interface unit, the signal routes are changed by the analog switches 401 and 403 for supporting the mobile commerce function.

The pin maps shown in FIGs. 4A and 4B are only examples and can be modified according to the interface type and design of the mobile device. For example, although the pins 4 and 6 are formed for protecting the mobile commerce module from being recognized, respectively, as an earphone or a remote controller, the pins 4 and 6 can be exchanged with each other.

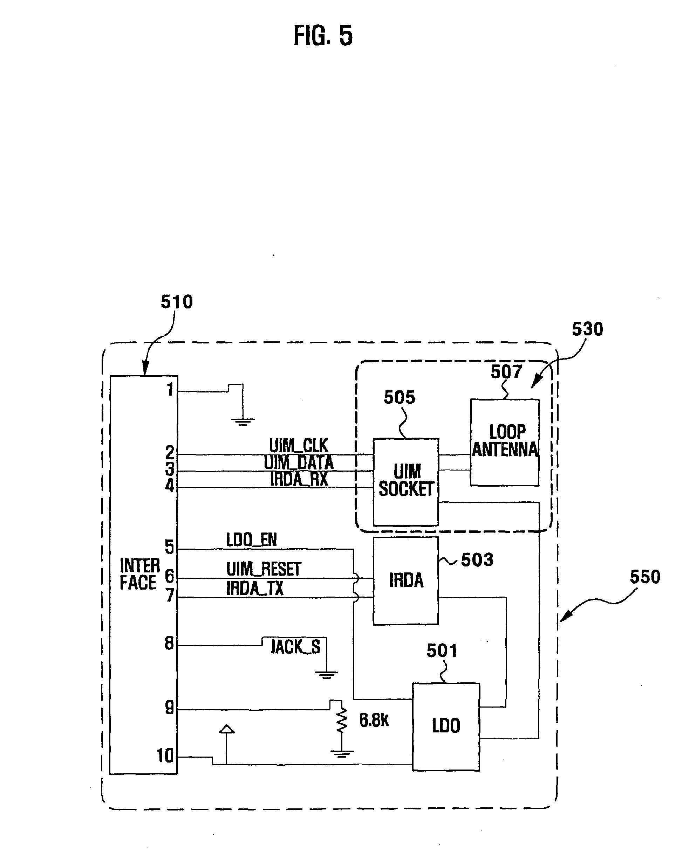

FIG. 5 is a block diagram illustrating a mobile commerce module of FIG. 2 according to an exemplary embodiment of the present invention.

The mobile commerce module can be implemented so as to be attached to or detached from the mobile device through the earphone port or the data communication port of the mobile device. In this embodiment, the mobile commerce module is provided with a plug that can be coupled with the earphone jack of the mobile device.

The mobile commerce module is provided with a driving circuit for enabling the mobile device to perform the mobile commerce function. The mobile commerce module also comprises an interface unit for connecting the mobile commerce module to the interface module 321 of the mobile device and to the mobile commerce function related elements such as the UIM socket and IrDA module.

Referring to FIG. 5, the mobile commerce module comprises an interface unit 510, a Low Drop Out (LDO) regulator 501, an IrDA communication unit 503, a UIM socket 505, and a loop antenna 507.

The mobile commerce module can be implemented as one chip module. For example, the mobile commerce module can be implemented to connect to the mobile device through the earphone jack or data communication port provided at the mobile device.

The interface unit 510 of the mobile commerce module is coupled with the earphone jack so as to communicate with the mobile device. The interface unit 510 is provided with an earphone jack plug; however, an exemplary embodiment of the present invention is not limited to the earphone jack plug, and can be configured with other types of connectors.

The interface unit 510 inputs the connection signal (Jack_S) and the external module identification signal (EAR-ADC) to the mobile device through the pin 8 and the pin 9, respectively.

The LDO regulator 501 provides a predetermined level of voltage for performing the mobile commerce function in the external mobile commerce module. The LDO regulator 501 can be a dual LDO regulator. The mobile commerce module is driven by the power supplied through the pin 10 of the interface unit 510 and supplies power to the IrDA communication unit 503 and the UIM socket 505 through the LDO regulator 501.

In an exemplary implementation, the IrDA automatically operates if the power is supplied and the power supply to the LDO regulator 501 is controlled according to the LDO enable signal (LDO_EN) input through the pin 5 of the interface unit 510.

When the mobile commerce device module is connected to the mobile device, the IrDA communication unit 503, UIM socket 505, and loop antenna 507 operate in appropriate manners for providing the mobile commerce service according to a user's request.

The external mobile commerce module exchanges mobile commerce-related signals (UIM_CLK, UIM_DATA, IrDA_RX, LDO_EN, UIM_RESET, and IrDA_TX) through the pins 2, 3, 4, 5, 6, and 7 of the interface unit 510.

In a case where a customer utilizes a mobile commerce service such as RFID enabled credit card payment, traffic card payment, and RFID membership entrance, the mobile commerce module activates only a part 530. In this case, the mobile commerce module does not require to be connected to the mobile device and separate power supply, but operates only by contact to a reader.

In the case of the mobile banking, IrDA-based credit card payment, IrDA-based membership entrance, and electric cash payment, the mobile commerce module activates a part 550. In this case, the customer's information contained in the UIM mounted in the UIM socket 505 is exchanged through the IrDA communication unit 503. The customer's information is provided to the reader through the mobile device.

In the case of using the mobile commerce module for searching information and online trading by visiting websites of banks, card companies, and securities companies, the mobile commerce module activates the part 530 and exchanges the customer information contained in the UIM with the websites by means of the mobile device through a mobile communication network.

In the case of using the mobile commerce module for booking tickets, the mobile commerce module activates the part 550 and performs communication by means of the mobile device through the mobile communication network.

The Pin map shown in FIG. 5 is an example and can be modified according to the interface type and design of the mobile commerce module. For example, although the pins 4 and 6 are formed for protecting the mobile commerce module from being recognized, respectively, as an earphone or a remote controller, the pins 4 and 6 can be exchanged with each other.

The mobile commerce module can decode signals generated when security required-key inputs are performed through the keypad unit of the mobile device, particularly when transmitting encrypted information related to the authentication to an accounting system by means of the mobile device.

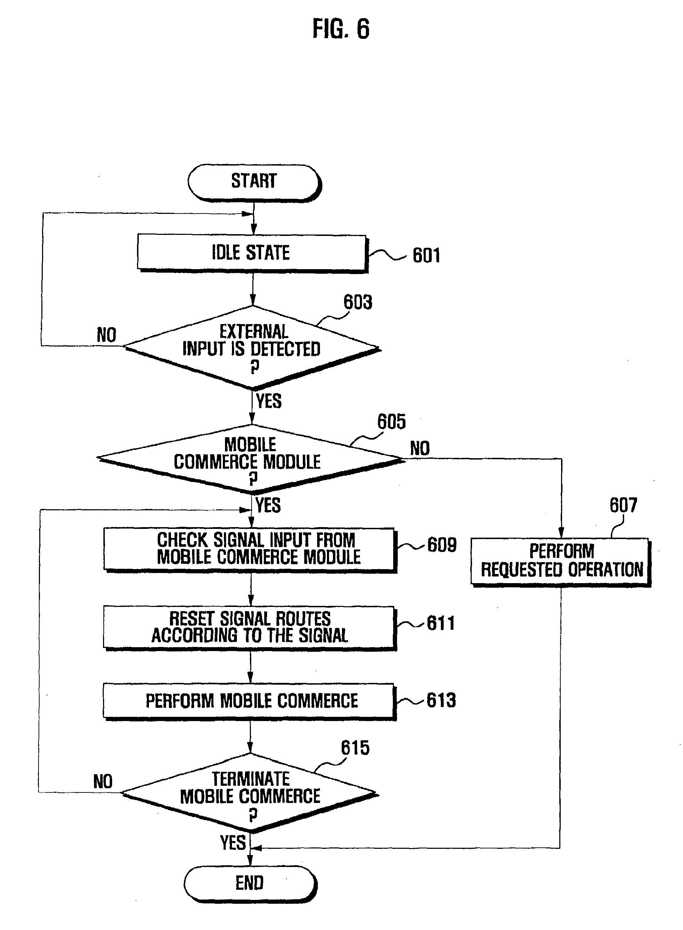

FIG. 6 is a flowchart illustrating a method for operating mobile commerce according to an exemplary embodiment of the present invention.

Referring to FIG. 6, while the mobile device is in an idle state at step S601, the mobile device monitors a connection of an external module at step S603.

If a connection of an external module is detected, the mobile device determines whether the connected external module is a mobile commerce module at step S605.

If it is determined that the detected external module is not a mobile commerce module, the mobile device performs an operation preset for the connected external module at step S607. For example, if the detected external module is an earphone, the mobile device outputs audio signals to the earphone; or if the detected external module is an external memory, the mobile device enables reading and writing on the external memory.

If it is determined that the detected external module is a mobile commerce module, the mobile device checks an input signal from the mobile commerce module at step S609 and resets the signal routes for performing the mobile commerce function at step S611. After the signal routes are reset, the mobile device performs the mobile commerce operations according to a user's instructions at step S613.

For example, if the mobile commerce module is connected to the mobile device by a user, the mobile device recognizes the connection of the mobile commerce module according to the input signal from the mobile commerce module.

If the mobile commerce module is recognized, the mobile device automatically sets the signal routes for the mobile commerce operation. After the signal routes are set, the mobile device performs the mobile commerce operations such as electric payment according to the user's intention.

While performing the mobile commerce operation, the mobile device determines whether a service termination request signal is input (S615). If a service termination request signal is detected, the mobile terminal terminates the mobile commerce operation. For example, if a key input for terminating the mobile commerce service is performed, or an automatic termination signal is generated, or the mobile commerce module is detached from the mobile device, the mobile commerce operation is terminated. Preferably, the signal route is automatically restored if the mobile commerce operation is terminated.

Although certain exemplary embodiments of the present invention have been described in detail hereinabove, it should be clearly understood that many variations and modifications of the basic inventive concepts herein taught which may appear to those skilled in the present art still fall within the spirit and scope of the present invention, as defined in the appended claims and their equivalents..

As described above, an apparatus and method for executing a mobile commerce service according to exemplary embodiments of the present invention is advantageous in that the mobile commerce service is enabled by a detachable mobile commerce module that is connected to a mobile device. In exemplary embodiments of the present invention, the mobile commerce function may be activated with an external mobile commerce module, whereby the mobile device can be manufactured in a slim design.

Also, the apparatus for executing the mobile commerce service according to an exemplary embodiment of the present invention is designed to provide the mobile commerce function with a mobile commerce module that can be attached to the mobile device, whereby the manufacturing cost of the mobile device can be reduced.

Also, the mobile device of an exemplary embodiment of the present invention can be manufactured to enable the mobile commerce function with a minimal number of components. Further, the mobile commerce module can be provided as an external accessory, resulting in improvement of design effect.

Certain aspects of the present invention can also be embodied as computer readable code on a computer readable recording medium. A computer readable recording medium is any data storage device that can store data which can be thereafter read by a computer system. Examples of the computer readable recording medium comprise read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

While the invention has been shown and described with reference to certain embodiments thereof, it will be understood by those skilled in the art that various changes in form and details may be made therein without departing from the spirit and scope of the invention as defined by the appended claims and their equivalents thereof.

## Claims

1. A method for executing mobile commerce using a mobile device with a separate mobile commerce module, comprising:
detecting, at the mobile device, a connection of an external module;
determining whether the external module comprises a mobile commerce module;
activating, if the external module comprises a mobile commerce module, a mobile commerce function by exchanging control signals with the mobile commerce module; and
executing an operation according to a key input.

2. The method of claim 1, wherein the determining whether the external module comprises a mobile commerce module comprises:
checking an identification information input from the external module; and
determining a type of the external module based on the identification information.

3. The method of claim 1, wherein the activating of a mobile commerce function comprises:
setting, if input from the mobile commerce module comprises a mobile commerce related signal, a mobile commerce function; and
resetting signal routes for operating the mobile commerce function.

4. The method of claim 1, further comprising converting, if the external module comprises the mobile commerce module, a phone mode into a mobile commerce mode.

5. The method of claim 1, further comprising switching, if the external module comprises the mobile commerce module, an additional function execution route for a phone mode to another additional function execution route for a mobile commerce mode.

6. The method of claim 1, further comprising switching, if the external module comprises the mobile commerce module, an additional function execution route for a phone mode to another additional function execution route for a mobile commerce mode through a general purpose input/output (GPIO) port.

7. An apparatus for executing mobile commerce, comprising:
a mobile device for providing an interface for connecting an external module, checking signals input through the interface, and performing a mobile commerce related operation;
a mobile commerce module attachable to the mobile device for performing a mobile commerce function; and
a connection interface for connecting the mobile commerce module to the mobile device.

8. The apparatus of claim 7, wherein the mobile device comprises:
an interface module for connecting an external module to the mobile device; and
a controller for controlling additional functions and mobile commerce functions according to signals input from the external module.

9. The apparatus of claim 8, wherein the interface module automatically resets the signal routes for operating at least one of the mobile commerce function and the additional function of the mobile device, if an input signal is input from the external module.

10. The apparatus of claim 8, wherein the interface module comprises at least one of an earphone jack, a data communication port, and a wireless communication means.

11. The apparatus of claim 8, wherein the interface module comprises:
an interface part for connecting the mobile device to the external module; and
at least one analog switch for switching signal routes for operating the mobile commerce function when the mobile commerce module is connected through the interface part.

12. The apparatus of claim 11, wherein the analog switch automatically changes the signal routes for sharing a signal line with an additional function in a phone mode.

13. The apparatus of claim 11, wherein the interface module controls the analog switch to change the signal routes according to a signal from a comparator.

14. The apparatus of claim 11, wherein the interface module controls the analog switch to change the signal routes according to a control signal from a general purpose input/output (GPIO) port of the controller.

15. The apparatus of claim 7, wherein the mobile device further comprises a mobile commerce processing unit for processing operations related to the mobile commerce function according to signals input from the external module.

16. The apparatus of claim 7, wherein the mobile commerce module comprises:
an interface unit for connecting to the mobile device and exchanging signals related to the mobile commerce function with the mobile device; and
at least one mobile commerce operation device for performing the operation related to the mobile commerce function.

17. The apparatus of claim 16, wherein the mobile commerce module further comprises a Low Drop Out regulator for supplying power to the mobile commerce operation devices.

18. The apparatus of claim 16, wherein the mobile commerce operation devices comprise at least one of a User Identification Module (UIM), an Infrared Data Association (IrDA) communication unit, and a loop antenna.

19. An apparatus for executing mobile commerce, comprising:
a mobile device for communicating through a wireless communication network and the mobile device comprising a connection port for coupling an external device; and
a mobile commerce module comprising a connection plug selectively coupled to the connection port of the mobile device, the mobile commerce module enabling the mobile device to activate a mobile commerce function.

20. The apparatus of claim 19, wherein the mobile device comprises a switching circuit for establishing signal routes for communicating control signals between the mobile device and the mobile commerce module when the mobile commerce module is coupled with the mobile device.

21. The apparatus of claim 19, wherein the connection port comprises an earphone port having at least one connection pin.

22. The apparatus of claim 21, wherein the connection plug comprises an earphone plug corresponding to the earphone port.

23. The apparatus of claim 22, wherein the mobile device comprises a switching circuit that switches the connection pin so as to establish a signal route for enabling the mobile device to exchange mobile commerce-related signals with the mobile commerce module when the mobile commerce module is coupled with the mobile device.

24. The apparatus of claim 23, wherein the mobile commerce module comprises a user identification module comprising user information required for mobile commerce.

25. The apparatus of claim 24, wherein the mobile commerce module transmits the user information to the mobile device automatically or according to a request signal from the mobile device.

26. The apparatus of claim 19, wherein the connection port comprises a data communication port having at least one connection pin.

27. The apparatus of claim 21, wherein the connection plug comprises a data communication plug corresponding to the earphone port.

28. The apparatus of claim 19, wherein the connection port comprises a Bluetooth adaptor port having at least one connection pin.

29. The apparatus of claim 28, wherein the connection plug comprises a Bluetooth adaptor plug corresponding to the Bluetooth adaptor port.
